# EUROPEAN PATENT APPLICATION

(11) **EP 4 475 245 A1**
(43) Date of publication of application: **11.12.2024**
(21) Application number: 24179832.1
(22) Date of filing: 04.06.2024
(51) Int. Cl.: H01M 10/04, H01M 10/0525, H01M 50/176, H01M 50/528, H01M 50/531, H01M 50/533, H01M 50/536, H01M 50/538, H01M 50/547, H01M 50/553, H01M 50/564, H01M 50/566

(54) **SECONDARY BATTERY**

(30) Priority: 05.06.2023 KR 20230072169
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(57) **Abstract**

A secondary battery includes an electrode assembly in which a negative electrode tab and a positive electrode tab are disposed at both ends thereof in a longitudinal direction, respectively, a case which accommodates the electrode assembly and of which both ends in a longitudinal direction are opened, a pair of cap plates coupled to both the opened ends of the case, respectively, and a negative electrode terminal and a positive electrode terminal, which are electrically connected to the negative electrode tab and the positive electrode tab and are exposed to the outside of the cap plates, respectively. A current collector is provided on an upper portion of the negative electrode tab or the positive electrode tab, a terminal connection part is provided on the current collector, and the terminal connection part is configured to pass through a plate hole defined in the cap plate so as to be electrically connected to the negative electrode terminal or the positive electrode terminal.

## Description

### Background

### 1. Field

Embodiments relate to a secondary battery having an improved connection structure between a terminal and a current collector.

### 2. Description of the Related Art

Secondary batteries are rechargeable unlike primary batteries. Of these secondary batteries, a low capacity battery including a battery cell in the form of a pack may be used in portable small electronic devices such as cellular phones and camcorders, and a high capacity battery module including tens of battery packs connected to one another may be used as a power source for driving motors, e.g., of hybrid vehicles, electric vehicles, and the like.

A typical secondary battery according to the related art may include a case, an electrode assembly, a terminal, and a cap plate. The electrode assembly, in which a separator is interposed between a positive electrode plate and a negative electrode plate, and an electrolyte are embedded in a case, and the cap plate is welded to the case.

According to the related art, a separate rivet is used to electrically connect the terminal to a current collector. For example, after forming a hole in the cap plate, a hollow type rivet is installed to pass through the hole. A gasket is disposed around the hole to insulate the rivet from surrounding components. The terminal disposed above the cap plate and the rivet are in physical contact with each other, the rivet and the current collector disposed below the cap plate are in physical contact with each other, and the rivet is welded to the current collector to conduct electricity between the current collector and the terminal.

According to the related art, a terminal connection part made of a bendable metal material is used to electrically connect the current collector to a current collecting plate disposed below the current collector. A method for connecting the current collector to the current collecting plate using the terminal connection part as a medium is adopted.

Current collected through the current collecting plate is transmitted to the current collector via the terminal connection part, and the current collected through the current collector is transmitted to the terminal via the hollow type rivet.

The current flow in an assembly method according to a coupling structure according to the related art is as follows:
Current collecting plate -> Terminal connection part -> Current collector -> Rivet -> Terminal

However, the coupling structure according to the related art has a disadvantage that the number of accessories required for electrical connection between components is large, and thus, the assembly structure is complicated.

The above-described information disclosed in the technology that serves as the background of the present disclosure is only for improving understanding of the background of the present disclosure and thus may include information that does not constitute the related art.

### SUMMARY

Aspects of some embodiments of the present disclosure provide a new type of secondary battery that reduces the number of components and implements a connection between a terminal and a current collector through a simple structure.

According to some embodiments, a secondary battery includes: an electrode assembly in which a negative electrode tab and a positive electrode tab are disposed at both ends thereof in a longitudinal direction, respectively; a case which accommodates the electrode assembly and of which both ends in a longitudinal direction are opened; a pair of cap plates coupled to both the opened ends of the case, respectively; and a negative electrode terminal and a positive electrode terminal, which are electrically connected to the negative electrode tab and the positive electrode tab and are exposed to the outside of the cap plates, respectively, wherein a current collector is provided on an upper portion of the negative electrode tab or the positive electrode tab, a terminal connection part is provided on the current collector, and the terminal connection part is configured to pass through a plate hole defined in the cap plate so as to be electrically connected to the negative electrode terminal or the positive electrode terminal.

The current collector may include: a first current collector welded to the negative electrode tab or the positive electrode tab of the electrode assembly; and a second current collector electrically connected to the first current collector, wherein the terminal connection part may be disposed to protrude upward from a top surface of the second current collector and pass through the plate hole so as to be connected to a bottom surface of the negative electrode terminal or the positive electrode terminal.

The negative electrode terminal or the positive electrode terminal may be constituted by a terminal body and a flange protruding outward from an outer circumferential surface of a lower end of the terminal body, wherein the terminal body may be provided with a cylindrical hole at a center thereof, and a bottom surface of the hole is closed.

A bottom surface of the terminal body may have a flat shape so as to be in contact with a top surface of the terminal connection part.

A recess having a shape corresponding to that of the terminal connection part may be defined in the bottom surface of the terminal body to accommodate a portion of the terminal connection part.

The shape of the terminal connection part may be provided in any one of a cylindrical shape, a conical shape, a square pillar, or a hexagonal pillar, and the plate hole may be punched in a shape corresponding to the shape of the terminal connection part.

The terminal connection part may be provided to protrude downward from a bottom surface of the terminal and pass through the plate hole so as to be connected to the top surface of the second current collector.

The terminal connection part may be provided to be integrated with the second current collector.

The terminal connection part may be provided as a separate component from the second current collector.

The second current collector may be directly welded to a top surface of the first current collector.

The second current collector may be made of the same material as the first current collector, wherein the second current collector may have a thickness greater than that of the first current collector.

The secondary battery may further include an insulator, wherein the insulator may be constituted by a lower insulator disposed below the cap plate, an upper insulator disposed above the cap plate, and an intermediate insulator extending along an inner circumferential surface of the cap plate to connect the lower insulator to the upper insulator, wherein the negative electrode terminal or the positive electrode terminal and the cap plate, and the cap plate and the second current collector may be insulated from each other through the insulator.

The negative electrode terminal or the positive electrode terminal and the insulator may be manufactured in an insert molding manner.

A low-level area that is lower than a surrounding area thereof may be provided on a top surface of the cap plate with a size corresponding to that of a plane of the upper insulator, and the upper insulator may be fixed in the low-level area.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:
FIG. 1 illustrates a perspective view of a secondary battery according to embodiments;
FIG. 2 illustrates an exploded perspective view of the secondary battery of FIG. 1;
FIG. 3A illustrates a perspective view of a terminal connection structure of the secondary battery according to embodiments;
FIG. 3B illustrates a cross-sectional view taken along line A-A in FIG. 3A;
FIG. 4A illustrates a perspective view of a terminal connection structure of a secondary battery according to other embodiments;
FIG. 4B illustrates a cross-sectional view taken along line A-A in FIG. 4A; and
FIGS. 5A to 5D illustrate an example of various shapes of a terminal connection part.

### DETAILED DESCRIPTION

Hereinafter, embodiments will be described in detail with reference to the accompanying drawings. Embodiments of the present disclosure may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween. The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper", "downwardly", "upwardly", "outwardly", "bottom (bottom surface)", "top (top surface)" and the like, may refer to positions as illustrated in the figures if there is no specific definition therefore. However, the spatially relative terms may be used herein for ease of description to describe one element or feature's relationship to another element(s) or feature(s) as illustrated in the figures, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

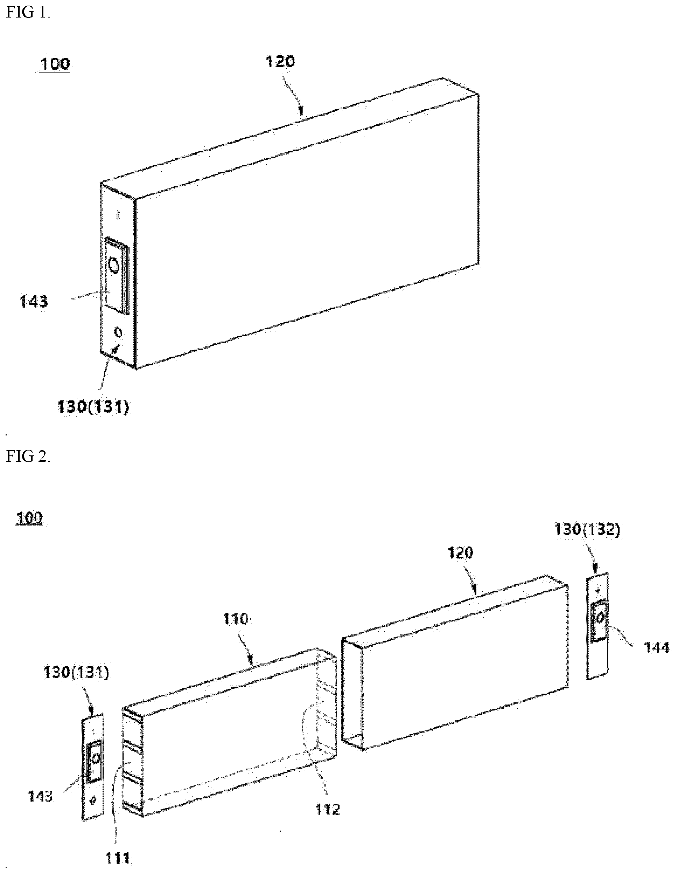

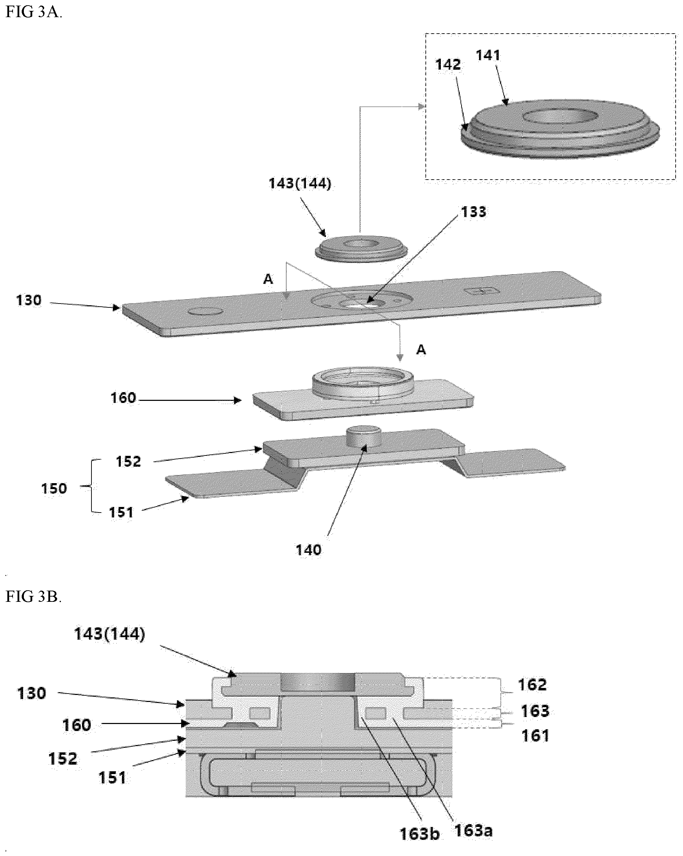

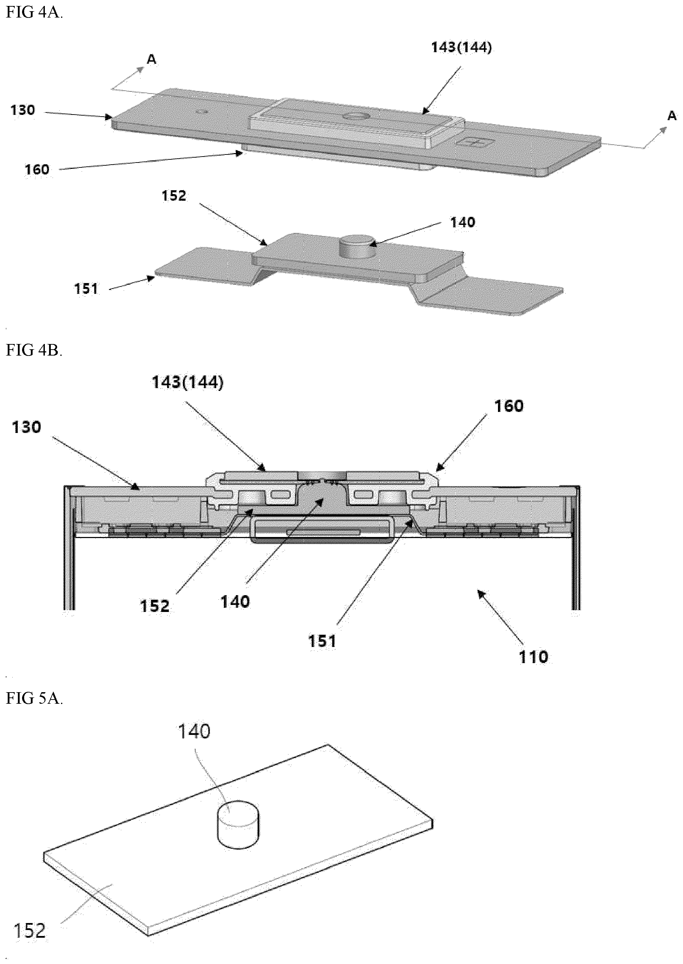

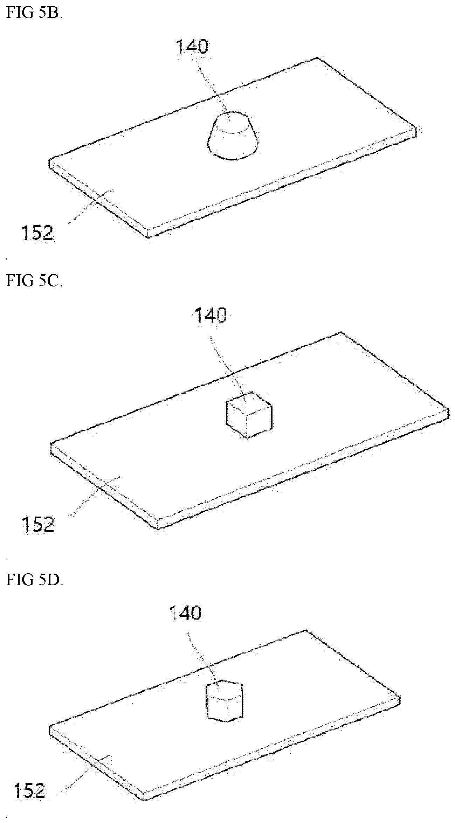

FIG. 1 illustrates a perspective view of a secondary battery according to embodiments, FIG. 2 illustrates an exploded perspective view of the secondary battery of FIG. 1, FIG. 3A illustrates a perspective view of a terminal connection structure of the secondary battery according to embodiments, FIG. 3B illustrates a cross-sectional view taken along line A-A in FIG. 3A, FIG. 4A illustrates a perspective view of a terminal connection structure of a secondary battery according to other embodiments, FIG. 4B illustrates a cross-sectional view taken along line A-A in FIG. 4A, and FIGS. 5A to 5D illustrate an example of various shapes of a terminal connection part. Hereinafter, a secondary battery according to an embodiment of the present disclosure will be described.

A secondary battery 100 according to an embodiment of the present disclosure may include an electrode assembly 110, a case 120, a pair of cap plates 130, a negative electrode terminal 143, and a positive electrode terminal 144.

First, the electrode assembly 110 may be manufactured by stacking or winding a negative electrode plate, a separator, and a positive electrode plate, which are provided in a thin plate shape or film shape. An outer appearance of the electrode assembly 110 manufactured in this manner may have a rectangular parallelepiped shape. In some embodiments, the electrode assembly 110 may have front and rear surface, each of which has the largest area, top and bottom surfaces that are long sides, and left and right surfaces that are short sides. In some embodiments, after manufacturing the electrode assembly 110, a plurality of finishing tapes may be attached to the outside to maintain the shape.

The negative electrode plate may be manufactured by applying a negative electrode active material such as graphite or carbon to a negative electrode base material made of metal foil such as copper, a copper alloy, nickel, or a nickel alloy. A negative electrode non-coating portion on which the negative electrode active material is not applied may be provided on a partial area of the negative electrode base material. A negative electrode tab 111 may be disposed or connected to the negative electrode non-coating portion. The negative electrode tab 111 may be disposed to face a left side, which is one end of the electrode assembly 110 in a longitudinal direction.

A positive electrode plate may be manufactured by applying a positive electrode active material such as transition metal oxide to a positive electrode base material made of metal foil such as aluminum or an aluminum alloy. A positive electrode non-coating portion on which the positive electrode active material is not applied may be provided on a partial area of the positive electrode base material. A positive electrode tab 112 may be disposed or connected to the positive electrode non-coating portion. The positive electrode tab 112 may be disposed to face a right side, which is the other end of the electrode assembly in the longitudinal direction. That is, the negative electrode tab 111 and the positive electrode tab 112 may be disposed to face opposite directions.

The separator may be disposed between the negative electrode plate and the positive plate to prevent short circuits and enable movement of lithium ions. The separator may be made of polyethylene, polypropylene, a composite film of polyethylene and polypropylene, but is not limited thereto.

In some embodiments, the negative electrode tab 111 and the positive electrode tab 112 may be disposed on both ends of the electrode assembly 110 in the longitudinal direction, respectively. In some embodiments, the negative electrode tab 111 and the positive electrode tab 112 may be electrically connected to a negative electrode terminal 143 and a positive electrode terminal 144 with cap plates 131 and 132 therebetween, respectively. According to this arrangement, a size of each of the current collecting components may be reduced compared to a structure in which the negative electrode tab 111 and the positive electrode tab 112 are disposed at one side. In some embodiments, space utilization inside the case 120 may be improved.

The case 120 may accommodate the electrode assembly 110, and both ends of the case 120 in the longitudinal direction may be opened. The case 120 may be made of a conductive metal such as aluminum, an aluminum alloy, or steel plated with nickel. For example, the case 120 may have a rectangular parallelepiped shape, and both the ends of the case 120 in the longitudinal direction may be opened. If the electrode assembly 110 is accommodated in the case 120, the negative electrode tab 111 and the positive electrode tab 112, which are disposed at both the ends of the electrode assembly 110 in the longitudinal direction, may be disposed at both the ends of the case 120 in the longitudinal direction.

A pair of cap plates may be coupled to both the opened ends of the case 120, respectively. Each of the cap plates 130 may be welded (e.g., laser welded) to an opening in the case 120 along a circumference. The first cap plate 131 may be coupled to one end of the case 120 in the longitudinal direction to seal the case 120, and the second cap plate 132 may be coupled to the other end of the case 120, which faces the first cap plate 131, in the longitudinal direction to seal the case 120. In some embodiments, the cap plate 130 may include copper, nickel, aluminum, or stainless steel.

The negative electrode terminal 143 and the positive electrode terminal 144 may be provided outside the cap plate 130. The negative electrode terminal 143 may be exposed to a left side of the first cap plate 131, and the positive electrode terminal 144 may be exposed to a right side of the second cap plate 132.

The terminals 143 and 144 may be provided outside the cap plate 130, and these components may be electrically insulated from each other through an insulator 160. In some embodiments, the terminals 143 and 144 may be fixed in position through the insulator 160, and the terminals 143 and 144 and the terminal connection part 140 may be electrically connected to each other to maintain the insulated state from the cap plate 130. If describing a structure of the insulator 160 with reference to FIG. 3B, the insulator 160 may be constituted by a lower insulator 161 disposed below the cap plate 130, an upper insulator 162 disposed above the cap plate 140, and an intermediate insulator 163 extending along an inner circumferential surface of the plate hole 133 to connect the lower insulator 161 to the upper insulator 162. The lower insulator 161 may have a hexahedral shape as illustrated in FIG. 3A and, for example, may have a planar shape corresponding to the second current collector 152. A bottom surface of the lower insulator 161 may be in contact with the second current collector 152, and a top surface of the lower insulator 161 may be in contact with a bottom surface of the cap plate 130. A through-groove through which the above-described terminal connection part 140 passes may be provided in the lower insulator 161. The upper insulator 162 may be disposed to be spaced upward from the lower insulator 161 using the intermediate insulator 163 as a medium and may be seated on a top surface of the cap plate 130. The insulator 160 may be manufactured using an insert molding method.

The negative electrode terminal 143 or the positive electrode terminal 144 and the cap plate 130 may be insulated through the insulator 160 configured as described above. In some embodiments, because the cap plate 130 and the current collector 150 are disposed with the lower insulator 161 of the insulator 160 therebetween, the cap plate 130 and the second current collector 152 may be insulated from each other. In some embodiments, the terminal (negative electrode terminal 143 or the positive electrode terminal 144) and the cap plate 130 and the cap plat 130 and the second current collector 152 may be electrically insulated from each other to prevent the electrical short from occurring.

That is to say, the negative electrode terminal 143 and the positive electrode terminal 144 may be provided outside the cap plate 130. In some embodiments, each of the terminals 143 and 144 may have a disk shape as illustrated in FIG. 3A or may have a flat hexahedral shape as illustrated in FIG. 4A. Each of the terminals 143 and 144 may be constituted by a terminal body 141 and a flange 142 protruding outward from a circumferential surface of a lower end of the terminal body 141. As illustrated in FIGS. 3A and 3B, the terminal body 141 may have a cylindrical hole in a center thereof, and a bottom surface of the hole may be closed. In some embodiments, the terminal body 141 may have a flat bottom surface so that the terminal connection part 140 is in contact with the bottom surface of the terminal body 141. In some embodiments, the flange 142 may extend radially outward along an outer circumferential surface of the lower end of the terminal body 141. The flange 142 may be hung on the upper insulator 162 and then be fixed to the insulator 160 so that the terminals 143 and 144 are coupled to the insulator 160.

In some embodiments, as illustrated in FIG. 3A, a low-level area that is lower than a surrounding area thereof may be provided on the top surface of the cap plate 130 with a size corresponding to that of a plane of the upper insulator 162, and the upper insulator 162 may be fixed in the low-level area. For example, the upper insulator 162 may have a cylindrical sidewall surrounding the terminals 143 and 144 to accommodate the disk-shaped terminals 143 and 144 therein as illustrated in FIG. 3A. In some embodiments, an upper side of the upper insulator 162 may be opened so that the terminals 143 and 144 are inserted downward, and a bottom surface of the upper insulator 162 may be provided with a through-groove through which the terminal connection part 140 passes. A hook part may be installed on an upper end of the cylindrical sidewall to extend along a circumference of the sidewall to prevent the terminals 143 and 144 from being separated. The intermediate insulator 163 may include at least one post part 163a connecting the upper insulator 162 to the lower insulator 161 and an inner circumferential wall part extending along the inner circumferential surface of the plate hole 133 to connect the lower insulator 161 to the upper insulator 162.

The terminals 143 and 144 may be inserted into and fixed to the upper insulator 162, and then, the flange 142 of each of the terminals 143 and 144 may be fixed in position to the sidewall hook part of the upper insulator 162. Because the insulator 160 is mounted on the cap plate 130 in the state of accommodating the terminals 143 and 144, the terminals 143 and 144 may be fixed to the cap plate 130 using the insulator 160 as a medium. If each of the terminals 143 and 144 has a circular donut shape as illustrated in FIG. 3A, the shape of the upper insulator 162 may be designed to have a cylindrical sidewall to accommodate the disk-shaped terminals 143 and 144 therein. In some embodiments, if each of the terminals 143 and 144 has a flat hexahedral shape as illustrated in FIG. 4A, the shape of the upper insulator 162 may be designed to have a square sidewall to accommodate the square-shaped terminals 143 and 144 therein. In some embodiments, the terminal body 141 of the terminals 143 and 144 may protrude more upward than the upper insulator 162 to function as a busbar. The negative electrode terminal 143 and the positive electrode terminal 144 may be manufactured using an insert molding method.

The negative electrode terminal 143 and the positive electrode terminal 144, which are coupled to the insulator, may be electrically connected to the current collector 150 below the cap plate 130 through the terminal connection part 140 disposed to pass through the cap plate 130, respectively. As a result, the negative electrode terminal 143 and the positive electrode terminal 144 may be electrically connected to the negative electrode tab 111 or the positive electrode tab 112 of the electrode assembly 110. In some embodiment, the current collector 150 may be provided on an upper portion of the negative electrode tab 111 or the positive electrode tab 112 of the electrode assembly 110, and the current collector 150 may be provided with the terminal connection part 140. A plate hole 133 may be defined in the cap plate 130 to spatially communicate with upper and lower sides of the cap plate 130. The terminal connection part 140 may be disposed to pass through the plate hole 133. The current collector (i.e., the second current collector 152) disposed below the cap plate 130 and the positive electrode terminal 144 or the negative electrode terminal 143 disposed above the cap plate 130 may be electrically connected to each other through the terminal connection part 140. Hereinafter, the current collector 150 and the terminal connection part 140 will be described in detail.

Each current collector 150 may include a first current collector 151 welded to the negative electrode tab 111 or the positive electrode tab 112 of the electrode assembly 110 and the second current collector 152 electrically connected to the first current collector 151.

First, the first current collector 151 may be welded to the negative electrode tab 111/positive electrode tab 112 (negative electrode non-coating portion tab/positive electrode non-coating portion tab) of the electrode assembly 110. The negative electrode non-coated tab may be provided by cutting a negative electrode plate so that the negative electrode plate protrudes in a lateral direction when the negative electrode plate is manufactured, and approximately two negative electrode non-coating portions may be provided to protrude in the lateral direction of the electrode assembly 110.

The first current collector 151 may be divided into a central first area and second and third areas at both sides of the first area. In some embodiments, the first current collector 151 may adopt a shape in which the first to third areas are disposed on the same plane, i.e., a structure without a stepped portion. In some embodiments, as illustrated in the drawings, the first current collector 151 may adopt a structure in which a stepped portion is provided between the first area and the second and third areas. The first area may be an area that is electrically coupled to the second current collector 152 and may be spaced apart from the electrode assembly 110 and the non-coating portion tabs. The second areas may be bent to extend outward and downward from the first area to the non-coating portion tabs disposed at both sides thereof. The third areas may extend from the second areas and be welded to the non-coating portion tabs, respectively. The stepped portion may be applied in the form described above to the first current collector 151 to realize elasticity itself. The first current collector 151 may have the stepped structure to provide its own elasticity, and thus, adhesion with the second current collector 152 disposed thereon may further increase to improve welding quality with the second current collector 152. In some embodiments, the first current collector 151 may include copper, nickel, aluminum, or stainless steel.

The second current collector 152 may be electrically connected to the first current collector 151. In some embodiments, as illustrated in FIG. 3A, the second current collector 152 may be provided on the first area of the first current collector 151. The second current collector 152 may be integrated with the first current collector 151 or may be provided separately and then welded to the first current collector 151. According to embodiments of the present disclosure, the second current collector 152 may be directly coupled to the top surface of the first current collector 151 by the welding. In some embodiments, the second current collector 152 may be previously coupled to the top surface of the first current collector 151 in a laser welding manner.

As described above, in the terminal coupling structure according to the related art, the bendable terminal connection part may be used for electrical connection between the first current collector 151 and the second current collector 152. In some embodiments, a first edge of the terminal connection part may be laser welded to the first current collector 151, and the second current collector 152 may be laser welded to a second edge disposed at a side opposite to the first edge of the terminal connection part. In some embodiment, current collected through the first current collector 151 may be transmitted to the second current collector 152 via the terminal connection part. According to some embodiments of the present disclosure, the second current collector 152 and the first current collector 151 may be directly coupled (terminal connection part is removed) to each other without using an intermediate medium for transmitting the current.

In some embodiments, the second current collector 152 may be made of the same material as the first current collector 151. In some embodiments, the second current collector 152 may include copper, nickel, aluminum, or stainless steel.

In some embodiments, the second current collector 152 may have a thickness greater than that of the first current collector 151 and a width greater than that of the first current collector 151. The current collection effect may be improved by designing the longitudinal cross-section of the second current collector 152 to be larger than that of the first current collector 151.

The terminal connection part 140 may be disposed to pass through the plate hole 133 provided in the cap plate 130 to electrically connect the negative electrode terminal 143 or the positive electrode terminal 144, which is disposed at the upper side, to the current collector 150. In some embodiments, the terminal connection part 140 may be made of a material capable of conducting electricity and also may be made of the same material as the second current collector 152 and the terminal, that is, copper, nickel, aluminum, or stainless steel.

In some embodiments, the terminal connection part 140 may be disposed on the second current collector 152. In some embodiments, the terminal connection part 140 may protrude upward from the top surface of the second current collector 152, pass through the plate hole 133, and be connected to the bottom surface of the negative electrode terminal 143 or the positive electrode terminal 144. The terminal connection part 140 may be integrated with the second current collector 152, or the terminal connection part 140 may be provided as a separate component from the second current collector 152.

The bottom surface of the terminals 143 and 144 (i.e., the bottom surface of the terminal body 141) may be provided to have a flat shape and then be in surface contact with the top surface of the terminal connection part 140 (see FIG. 3B). In some embodiments, a recess (not shown) may be defined in the bottom surface of the terminal (i.e., the bottom surface of the terminal body 141) in a shape corresponding to the shape of the terminal connection part 140 to accommodate a portion of the terminal connection part 140.

In other embodiments, the terminal connection part 140 may be disposed on the terminals 143 and 144. That is, the terminal connection part 140 may protrude downward from the bottom surface of the terminals 143 and 144, pass through the plate hole 133, and be connected to the top surface of the second current collector 152. In some embodiments, the top surface of the second current collector 152 may be provided to have a flat shape and then be in surface contact with the bottom surface of the terminal connection part 140. In some embodiments, a recess may be defined in the top surface of the second current collector 152 in a shape corresponding to the shape of the terminal connection part 140 to accommodate a portion of the terminal connection part 140.

In some embodiments, in which the terminal connection part 140 is disposed on the second current collector 152, the terminal connection part 140 and the terminals 143 and 144 may be electrically connected to each other by the welding. In some embodiments, in which the terminal connection part 140 is disposed on the terminals 143 and 144, the terminal connection part 140 and the second current collector 152 may be electrically connected to each other by the welding. For example, a method for performing the welding in a state in which a clad sheet (two layers are thermally compressed) made of aluminum (about 2 T) and copper (about 0.5 T to about 0.7 T) is disposed between the terminals 143 and 144 and the second current collector 152 may be adopted.

In some embodiments, a three-dimensional shape of the terminal connection part 140 may not be limited thereto and may be provided in any one of the following shapes, for example, the cylindrical shape in FIG. 4A, the conical shape in FIG. 4B, the square pillar in FIG. 4C, and the hexagonal pillar in FIG. 4D. In some embodiments, the plate hole 133 through which the terminal connection part 140 passes may be punched in a shape corresponding to the shape of the terminal connection part 140.

In the present invention, a current collector (150) is provided on an upper portion of the negative electrode tab (111) or the positive electrode tab (112), a terminal connection part (140) is provided on the current collector (150), and the terminal connection part (140) passes through a plate hole (133) defined in the cap plate so as to be electrically connected to the negative electrode terminal (143) or the positive electrode terminal (144).

There may be an advantage that the number of components is reduced, and the electrical connection between the terminal and the current collector is realized through the simple structure.

The flow of current in assembly method according to coupling structure according to the related art is as follows:
Current collecting plate -> Terminal connection part -> Current collector -> Rivet -> Terminal

The flow of current in assembly method according to coupling structure according to the present disclosure is as follows:

First current collector 151 -> Second current collector 152 -> Terminals 143 and 144

As compared above, according to the coupling structure of the present disclosure, because the first current collector 151 and the second current collector 152 are directly coupled to each other by the method such as the laser welding, the first current collector 151 and the second current collector 152 may be connected to each other without components such as the terminal connection part to reduce the number of components and simplify the structure.

In some embodiments, the terminal connection part 140 may be provided on the second current collector 152, and the recess that accommodates the terminal connection part 140 may be provided. In other embodiments, the terminal connection part 140 may be provided on the terminal, and the structure (recess/flat shape) that accommodates the terminal connection part 140 may be provided to electrically connect the second current collector 152 to the terminal without the hollow rivet according to the related art, thereby reducing the number of components and simplifying the structure.

According to some embodiments, there may be the advantage that the number of components is reduced, and the electrical connection between the terminal and the current collector is realized through the simple structure.

The above-mentioned embodiment is merely an embodiment of the secondary battery, and thus, the present disclosure is not limited to the foregoing embodiments, and also it will be understood by those of ordinary skill in the art that various changes in form and details may be made therein without departing from the scope of the present disclosure as defined by the following claims.

## Claims

1. A secondary battery (100) comprising:
an electrode assembly (110) in which a negative electrode tab (111) and a positive electrode tab (112) are disposed at opposite ends thereof in a longitudinal direction;
a case (120) which accommodates the electrode assembly (110) and of which opposite ends in a longitudinal direction are opened;
a pair of cap plates (130) respectively coupled to both the opened ends of the case (120); and
a negative electrode terminal (143) and a positive electrode terminal (144) respectively electrically connected to the negative electrode tab (111) and the positive electrode tab (112) and are exposed to an outside of the cap plates,
wherein a current collector (150) is provided on an upper portion of the negative electrode tab (111) or the positive electrode tab (112),
a terminal connection part (140) is provided on the current collector (150), and
the terminal connection part (140) passes through a plate hole (133) defined in the cap plate so as to be electrically connected to the negative electrode terminal (143) or the positive electrode terminal (144).

2. The secondary battery (100) as claimed in claim 1, wherein the current collector (150) comprises:
a first current collector (151) welded to the negative electrode tab (111) or the positive electrode tab (112) of the electrode assembly (110); and
a second current collector (152) electrically connected to the first current collector (151),
wherein the terminal connection part (140) is disposed to protrude upwardly from a top surface of the second current collector (152) and pass through the plate hole (133) so as to be connected to a bottom surface of the negative electrode terminal (143) or the positive electrode terminal (144).

3. The secondary battery (100) as claimed in claim 1 or 2, wherein the negative electrode terminal (143) or the positive electrode terminal (144) comprises a terminal body (141) and a flange (142) protruding outwardly from an outer circumferential surface of a lower end of the terminal body (141),
wherein the terminal body (141) hasa cylindrical hole at a center thereof, and a bottom surface of the cylindrical hole is closed.

4. The secondary battery (100) as claimed in claim 3, wherein a bottom surface of the terminal body (141) has a flat shape and is in contact with a top surface of the terminal connection part (140).

5. The secondary battery (100) as claimed in claim 3 or 4, wherein a recess having a shape corresponding to that of the terminal connection part (140) is defined in the bottom surface of the terminal body (141) to accommodate a portion of the terminal connection part.

6. The secondary battery (100) as claimed in any of the preceding claims, wherein a shape of the terminal connection part (140) is any one of a cylindrical shape, a conical shape, a square pillar, or a hexagonal pillar, and
the plate hole (133) is formed in a shape corresponding to the shape of the terminal connection part.

7. The secondary battery (100) as claimed in any of claims 2 to 6, wherein the terminal connection part protrudes downwardly from a bottom surface of the terminal (143, 144) and passes through the plate hole (133) so as to be connected to the top surface of the second current collector (152).

8. The secondary battery (100) as claimed in any of claims 2 to 7, wherein the terminal connection part (140) is integral with the second current collector (152).

9. The secondary battery (100) as claimed in any of claims 2 to 7, wherein the terminal connection part (140) is a separate component from the second current collector (152).

10. The secondary battery (100) as claimed in any of claims 2 to 9, wherein the secondary battery is formed such that the second current collector (152) is directly welded to a top surface of the first current collector (151).

11. The secondary battery (100) as claimed in any of claims 2 to 10, wherein the second current collector (152) is made of the same material as the first current collector (151), and
wherein the second current collector (152) has a thickness greater than that of the first current collector (151).

12. The secondary battery (100) as claimed in any of claims 2 to 11, further comprising an insulator (160),
wherein the insulator (160) comprises a lower insulator (161) disposed below each of the pair of cap plates, an upper insulator (162) disposed above each of the pair of cap plates, and an intermediate insulator (163) extending along an inner circumferential surface of each of the pair cap plates (130) to connect the lower insulator (161) to the upper insulator (162),
wherein the negative electrode terminal (143) and one (131) of the pair of cap plates or the positive electrode terminal (144) and the other (132) of the pair cap plates (130) are insulated from each other through the insulator (160), and
each of the pair of cap plates and the second current collector (152) are insulated from each other through the insulator (160).

13. The secondary battery (100) as claimed in claim 12, wherein the negative electrode terminal (143) or the positive electrode terminal (144) and the insulator (160) are manufactured by molding manner.

14. The secondary battery (100) as claimed in claim 12, wherein at least one of the cap plates includes a low-level area that is lower than a surrounding area thereof in a top surface of the cap plate (130) with a size corresponding to that of a plane of the upper insulator (162), and
the upper insulator (162) is fixed in the low-level area.
